# EUROPÄISCHE PATENTSCHRIFT

(11) **EP 1 453 180 B1**
(45) Veröffentlichungstag und Bekanntmachung des Hinweises auf die Patenterteilung: **20.04.2011**
(21) Anmeldenummer: 04002951.4
(22) Anmeldetag: 10.02.2004
(51) Int. Cl.: H02K 1/26

(54) **Elektrische Maschine mit geblechtem Läufer**
Electric machine having rotor lamination construction
Machine électrique avec construction d'un paquet de tôles de rotor

(30) Priorität: 28.02.2003 DE 10309161
(43) Veröffentlichungstag der Anmeldung: 01.09.2004
(73) Patentinhaber: SIEMENS AKTIENGESELLSCHAFT, 80333 München (DE)
(72) Erfinder: Fichtner, Siegfried, 90584 Allersberg (DE); Hofmann, Jürgen, 91174 Spalt (DE); Müssig, Karl, 90455 Nürnberg (DE); Verhoeven, Daniel, 90425 Nürnberg (DE)

(56) Entgegenhaltungen:
- DE-A1- 19 901 195
- US-A- 1 435 357
- US-A- 1 467 938
- US-A- 5 704 111

## Beschreibung

Die Erfindung betrifft eine elektrische Maschine mit zumindest einem auf einer Welle befindliche Blechpaket, als Teil eines Läufers.

Elektrische Maschinen weisen insbesondere an den Stirnseiten ihres aus Blechpaketen gebildeten Läufers Platten auf. Dabei ist es betriebswirtschaftlich Gründen sinnvoll, für diese Platten an den Stirnseiten der Blechpakete den gleichen Querschnitt vorzusehen wie bei den Blechen des Blechpaket selbst. Da aber die Platten aus einem anderen Werkstoff wie z.B. die Stäbe eines Kurzschlusskäfigläufers sind, schrumpft z.B. nach dem Gießvorgang aus werkstoffspezifischen Gründen ein Aluminiumkäfig doppelt so stark, wie das ihn umgebende Blechpaket. Dies führt insbesondere im Bereich der Kurzschlussringe zu starken Kräften, die das Blechpaket zur Mitte hin zusammendrücken. Erhalten nun die Platten mit Ausnahme der Läufernuten dieselbe Geometrie wie die Bleche, so tritt eine Achslocheinschnürung an den beiden Stirnseiten des Blechpakets ein, da ein axiales Ausweichen der Bleche fast nahezu unterdrückt wird.

Ohne zusätzliche Sondermaßnahmen ist nunmehr das Einziehen der Welle in das Blechpaket nicht möglich, weil die erforderliche axiale Fügekraft zu groß wird. Das zu große lokale Übermaß kann auch zum "Fressen" an der Welle führen, so dass eine Schädigung der Bauteile eintritt und der Läufer letztendlich unbrauchbar wird.

Aus der DE 199 01 195 A1 ist eine elektrische Maschine bekannt
- mit zumindest einem auf einer Welle befindlichen Blechpaket, als Teil eines Läufers,
- wobei das Blechpaket an seinen Stirnseiten Platten aufweist,
- wobei das Blechpaket und die Platten Ausnehmungen aufweisen, die durch elektrisch leitfähiges Material, wie z.B. Kupfer oder Aluminium, ausgegossen sind, welches an den Stirnseiten des Blechpakets Kurzschlussringe bildet,
- wobei die Platten einen größeren Innendurchmesser als das Blechpaket aufweisen.

Der Erfindung liegt demzufolge die Aufgabe zugrunde, eine elektrische Maschine zu schaffen, bei der eine hohe Kompaktheit des Blechpakets des Läufers, als auch eine axiale Bewegung des Blechpakets während der Fertigung möglich ist. Des Weiteren soll die Fertigung vereinfacht werden.

Die Lösung der gestellten Aufgabe gelingt durch eine elektrische Maschine nach einem der Ansprüche 1 bis 3.

Damit erhalten die Bleche bereits beim Gießen und insbesondere beim Fügen der Welle einen zusätzlichen axialen Bewegungsfreiraum, der nahezu einer Ausführung ohne Platten entspricht.

Der Innendurchmesser der Platten an den Stirnseiten des Blechpakets ist im Bereich der Welle größer als der Außendurchmesser der Welle. Damit wird die Platte radial nur durch die Läuferstäbe positioniert.

Es sind aber auch manschettenartige Platten einsetzbar, die die Welle umschließen.

Um eine Anbindung der Platte an die Welle zu erhalten wie es z.B. aus Festigkeit und Betriebssicherheitsgründen notwendig sein kann, erstrecken sich in einer Ausführungsform der Erfindung mindestens drei Stege vom Innendurchmesser der Platte radial bis zum Außendurchmesser der Welle. Die einzelnen Stege haben dabei eine größere Nachgiebigkeit in axialer Richtung des Blechpakets als ein geschlossener Ring. Damit wird beim Fügen der Welle mit dem Blechpaket das Fressen vermieden, da die Stege in axialer Richtung nachgeben.

Um auf jeden Fall auch ein Fressen der Stege bei Kontakt mit dem Wellendurchmesser zu vermeiden, weisen in besonders bevorzugten Ausführungsformen die Stege Mittel auf, die eine radiale Nachgiebigkeit beinhalten. Diese Mittel sind in den Stegen als Schlitze in Umfangsrichtung ausbildbar oder durch Materialentnahme durch Lasern insbesondere im Endbereich der Stege, d.h. im Bereich der Welle. Damit wird eine weitere radiale Nachgiebigkeit der Stege geschaffen. Durch diese Maßnahme ist ein radiales Ausweichen des Stegs möglich, sodass beim Fügen mit der Welle radial ein Eindringen des Steges in das Wellenmaterial verhindert wird.

Vorteilhafterweise ist es möglich, entweder als separate Maßnahme oder als Ergänzung zu den bisher beschrieben Maßnahmen, die Stege in einem vorgelagerten Arbeitsschritt plastisch zu verformen um den einbeschriebenen Innendurchmesser der Stege minimal zu vergrößern.

Vorteilhafterweise weisen die Platten, wenn sie als Teil eines Druckgießwerkzeugs benutzt werden Mittel auf, die eine Lunkerbildung vermindern.

Zumindest ein Steg wird vorteilhafterweise auch genutzt um über eine Passfeder eine Winkelausrichtung der Platte zur Welle bzw. zu einem Paketierdorn zu schaffen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert. Darin zeigen:

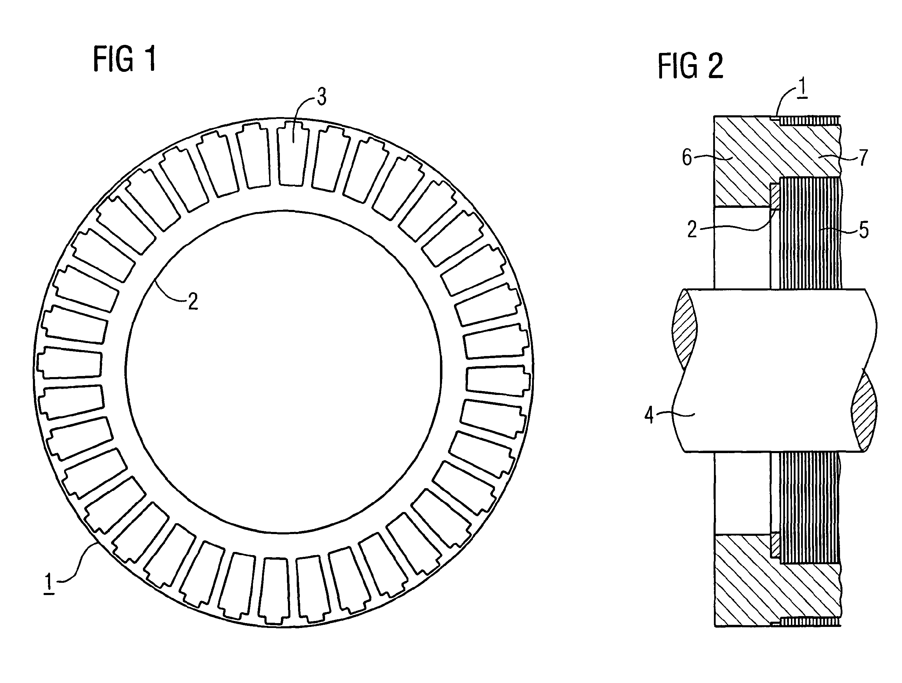

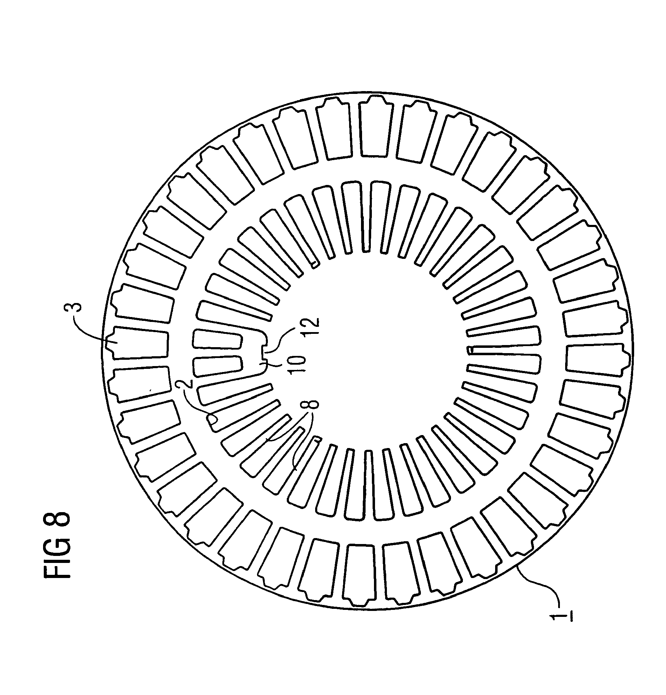

FIG 1 bis 11 Darstellungen von Platten und deren Einbauort an der Stirnseite eines Blechpakets.

FIG 1 zeigt eine Platte 1 mit Ausnehmungen 3, die für Läuferstäbe 7 vorgesehen sind. Die Platte 1 zeigt außerdem einen Innendurchmesser 2, der größer als der Durchmesser einer Welle 4 ist, auf den die Platte 1 mit ihrem Blechpaket 5 aufgeschrumpft wird. Die Ausnehmungen 3 sind vorteilhafterweise radial nach außen geschlossen, um so auch Radialkräfte der Läuferstäbe 7 im Betrieb einer nicht näher dargestellten elektrischen Maschine aufnehmen zu können.

Die Läuferstäbe 7 sind ebenso in offenen oder halboffenen Ausnehmungen 3 als den Nuten positionierbar. Die Radialkräfte können ebenso durch geeignete, allgemein bekannte Formgebung der Ausnehmung 3 aufgenommen werden, z.B. durch Tropfenform oder Rautenform der Ausnehmung 3.

Im Betrieb der elektrischen Maschine kann es in Abhängigkeit der Drehzahl und des Materials auch ausreichend sein, wenn lediglich einige Bleche radial geschlossene Ausnehmungen 3 aufweisen.

Für den Fertigungsprozess ist es vorteilhaft, wenn die Ausnehmungen 3 radial geschlossen sind, da somit das radiale Austreten des eingegossenen flüssigen Leitermaterials Aluminium oder Kupfer verhindert wird. Das Austreten bei radial offenen Ausnehmungen 3 kann auch durch geeignete Vorrichtungen wie Keile etc. während eines Gießvorganges bei Normaldruck oder erhöhtem Druck vermieden werden.

FIG 2 zeigt im montierten Zustand die Platte 1, die das Blechpaket 5 des Läufers fixiert. Die Ausnehmungen 3 der Platte 1 und des Blechpakets 5 sind mit elektrisch leitfähigem Material ausgegossen insbesondere mit Aluminium und Kupfer und bilden an den Stirnseiten der Blechpakete 5 Kurzschlussringe 6. Der Innendurchmesser 2 ist dabei bezüglich dem Durchmesser der Welle 4 zurückgesetzt, um so eine axiale Beweglichkeit des Blechpakets 5 insbesondere während und nach dem Gießvorgang und beim Fügen der Welle 4 mit dem Blechpaket 5 zu erhalten. Die Platte 1 wird dabei nur durch die Läuferstäbe 7 positioniert.

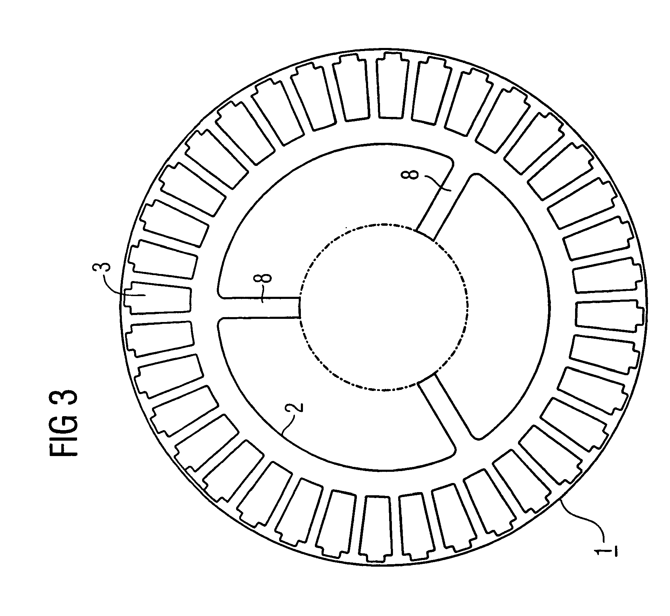

FIG 3 zeigt eine Platte 1, die der der FIG 1 sehr ähnlich ist, mit dem Unterschied, dass nunmehr vom Innendurchmesser 2 der Platte 1 drei radiale Stege 8 sich zur Welle 4 erstrecken. Die Breite der Stege 8 liegt dabei in Abhängigkeit u.a. vom Wellendurchmesser bei 4 bis 20 mm. Um die axiale Nachgiebigkeit der Stege 8 zu erhöhen, ist es vorteilhaft, die Dicke der Stege 8 zu reduzieren, um so beim Fügen des Blechpakets 5 mit der Welle 4 kein Schneiden oder "Fressen" zu verursachen.

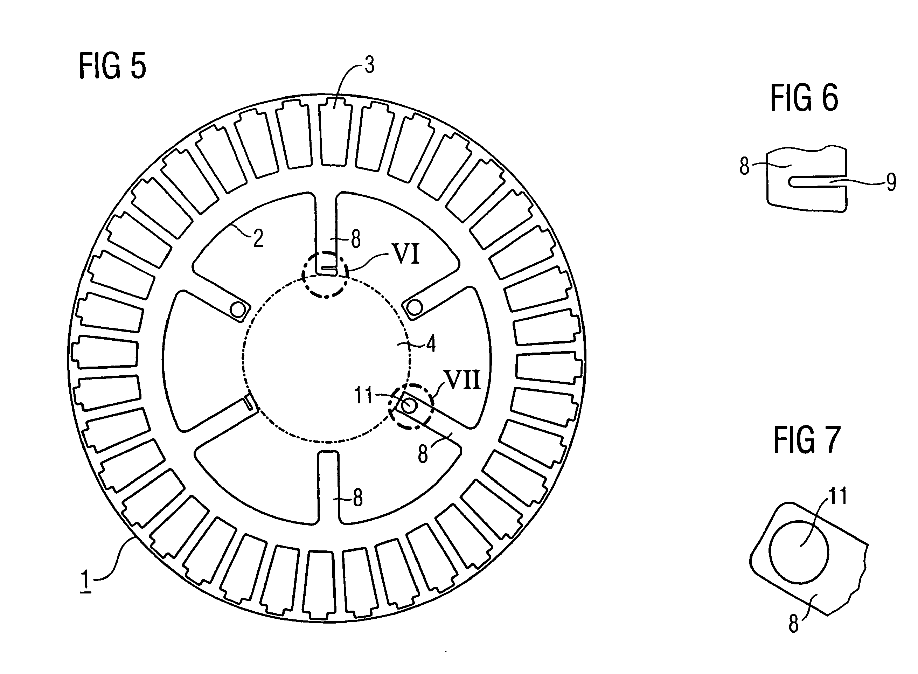

Eine weitere Möglichkeit dieser Schneidwirkung zu unterbinden ist es, zumindest einige Stege im Bereich der Welle 4 mit einem in Umlaufsrichtung versehenen Schlitz 9 (FIG 6) oder mit einer lochartigen Ausnehmung 11 (FIG 7) zu versehen. Dabei wird die radiale Nachgiebigkeit weiter erhöht und es wird beim Fügen der Welle 4 ein radiales Ausweichen der Stege 8 gewährleistet, so dass ein Eindringen in das Wellenmaterial verhindert wird.

Es ist außerdem möglich die Stege 8 in einem weiteren Arbeitsschritt vor dem Fügevorgang plastisch zu verformen um den einbeschriebenen Innendurchmesser der Stege 8 minimal zu vergrößern. Durch die Stege 8 wird eine Positionierung der Platte 1 auf der Welle 4 geschaffen.

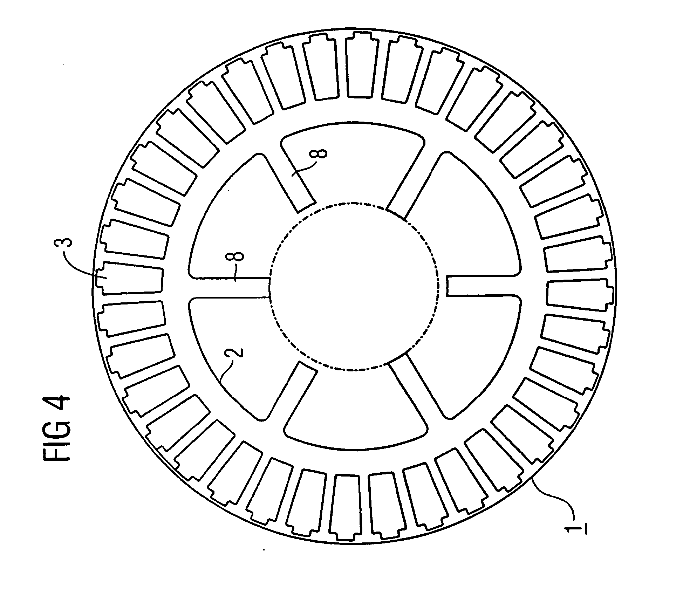

Es reicht dabei, wie FIG 4 zeigt, wenn mindestens drei der Stege 8 am Außendurchmesser der Welle 4 anliegen.

FIG 8 zeigt ein aus Festigkeitsgründen erhöhte Zahl von Stegen 8, die in Richtung Welle 4 ausgerichtet sind, wobei ein Steg 8 oder auch eine vorgebbare Anzahl von Stegen 8 auch genutzt werden kann, um über eine Passfeder 12 eine Winkelausrichtung der Platte 1 zur Welle 4 oder zu einem nicht näher dargestellten Paketierdorn zu erreichen.

Fig. 9 bis 11 zeigen in einer weiteren vorteilhaften Ausgestaltung eine Platte 1 bei der durch eine zum Blechpaket 5 weisenden manschettenartige Gestaltung der Platte 1 eine axiale Verschiebung der daran angrenzenden Bleche ermöglicht wird.

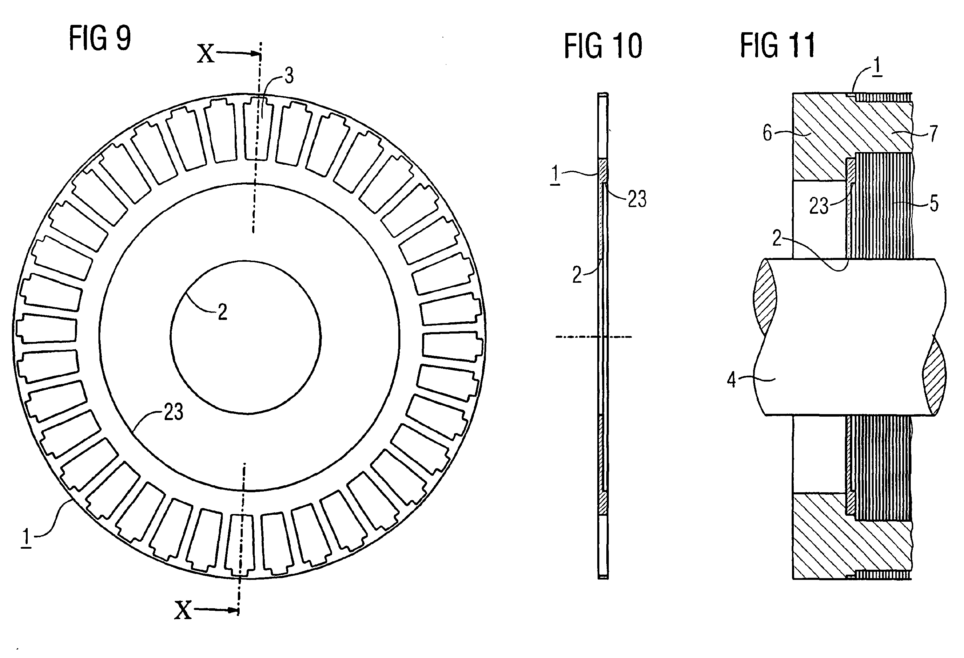

Eine derartige Gestaltung der Platte 1 lässt sich in einfacher Art und Weise durch eine dementsprechende Materialentnahme auf der dem Blechpaket 5 zugewandeten Seite der Platte 1 erreichen. Dabei sind spanabhebende Verfahren wie z.B. Drehen geeignet. Durch eine Freidrehung entsteht somit eine Abstufung wobei der Innendurchmesser 2 bei dieser Ausgestaltung nunmehr an der Welle 4 anliegt. Somit wird u.a. eine unterschiedliche axiale Ausdehnung der Platte 1 geschaffen (FIG 10), die auch bei direktem Kontakt der Platte 1 mit der Welle 4 ein axiales Ausweichen der im Bereich der Platte 1 vorhandenen Bleche bei der Fertigung ermöglicht.

Dabei entspricht die innere axiale Ausdehnung der Platte 1 ungefähr dem zweifachen der äußeren axialen Ausdehnung der Platte 1.

Die Platte ist vorteilhafterweise auch hochfestem Material, wie z.B. Stahl, der sich aus wirtschaftlichen Gründen besonders dazu eignet.

## Patentansprüche

1. Elektrische Maschine
- mit zumindest einem auf einer Welle (4) befindlichen Blechpaket (5), als Teil eines Läufers,
- wobei das Blechpaket (5) an seinen Stirnseiten Platten (1) aufweist,
- wobei das Blechpaket (5) und die Platten (1) Ausnehmungen (3) aufweisen, die durch elektrisch leitfähiges Material, wie z.B. Kupfer oder Aluminium, ausgegossen sind, welches an den Stirnseiten des Blechpakets (5) Kurzschlussringe bildet,
- wobei die Platten (1) eben ausgeführt sind und mit einer ihrer Stirnseiten direkt am Blechpaket anliegen,
- wobei die Platten (1) einen Innendurchmesser (2) aufweisen, der zumindest um 2 mm größer ist, als der Innendurchmesser des Blechpakets (5), um während der Fertigung ein axiales Ausweichen der im Bereich der Platten (1) befindlichen Bleche des Blechpakets (5) zu ermöglichen.

2. Elektrische Maschine
- mit zumindest einem auf einer Welle (4) befindlichen Blechpaket (5), als Teil eines Läufers,
- wobei das Blechpaket (5) an seinen Stirnseiten Platten (1) aufweist,
- wobei das Blechpaket (5) und die Platten (1) Ausnehmungen (3) aufweisen, die durch elektrisch leitfähiges Material, wie z.B. Kupfer oder Aluminium, ausgegossen sind, welches an den Stirnseiten des Blechpakets (5) Kurzschlussringe (6) bildet,
- wobei die Platten (1) mindestens drei Stege (8) aufweisen, die im wesentlichen radial nach innen weisen und so zur radialen Positionierung der Platten (1) auf der Welle (4) dienen und während der Fertigung ein axiales Ausweichen der im Bereich der Platten (1) befindlichen Bleche des Blechpakets (5) ermögüchen.

3. Elektrische Maschine
- mit zumindest einem auf einer Welle (4) befindlichen Blechpaket (5), als Teil eines Läufers,
- wobei das Blechpaket (5) an seinen Stirnseiten Platten (1) aufweist,
- wobei das Blechpaket (5) und die Platten (1) Ausnehmungen (3) aufweisen, die durch elektrisch leitfähiges Materials, wie z.B. Kupfer oder Aluminium, ausgegossen sind, welches an den Stirnseiten des Blechpakets (5) Kurzschlussringe bildet,
- wobei die Platten (1) jeweils eine auf der dem Blechpaket (5) zugewandten Seite durch eine Freidrehung erzeugte Abstufung aufweisen, derart, dass die radial innere axiale Ausdehnung der Platten (1), kleiner its als die radial äußerse axiale Ausdehnung der Platten (1), um während der Fertigung ein axiales Ausweichen der im Bereich der Platten (1) befindlichen Bleche des Blechpakets (5) zu ermöglichen.

4. Elektrische Maschine nach Anspruch 2, **dadurch gekennzeichnet , dass** zumindest ein Steg (8) Mittel aufweist, die seine Nachgiebigkeit in radialer Richtung erhöhen

5. Elektrische Maschine nach Anspruch 4, **dadurch gekennzeichnet , dass** zumindest ein Steg (8) einen in Umfangsrichtung verlaufenden Schlitz (9) aufweist.

6. Elektrische Maschine nach Anspruch 4, **dadurch gekennzeichnet , dass** die Dicke der Stege reduziert ist.

7. Elektrische Maschine nach Anspruch 4, **dadurch gekennzeichnet , dass** zumindest einige Stege im Bereich der Welle (4) mit einem in Umlaufsrichtung versehenen Schlitz (9) oder mit einer lochartigen Ausnehmung (11) versehen sind.

8. Elektrische Maschine nach Anspruch 4, **dadurch gekennzeichnet dass** die Stege plastisch verformt sind, um den ein beschriebenen Innendurchmesser der Stege (8) minimal zu vergrößern.

9. Elektrische Maschine nach einem der vorhergehenden Ansprüche, **dadurch gekennzeichnet , dass** die Ausnehmungen radial geschlossen oder offen sind, wobei, wenn die Ausnehmungen offen sind, eine Tropfen- oder Rautenform der Ausnehmungen vorliegt.

10. Elektrische Maschine nach einem der vorhergehenden Ansprüche, **dadurch gekennzeichnet , dass** zumindest einzelne Bleche radial geschlossene Ausnehmungen aufweisen.

## Claims

1. Electric machine
- with at least one laminate stack (5), as part of a rotor, which is located on a shaft (4),
- wherein the laminate stack (5) has plates (1) on its end sides,
- wherein the laminate stack (5) and the plates (1) have cutouts (3), which are filled with electrically conductive material, such as copper or aluminium, which forms short-circuiting rings at the end sides of the laminate stack (5) ,
- wherein the plates (1) have a planar configuration and bear with one of their end sides directly against the laminate stack,
- wherein the plates (1) have an inner diameter (2) which is at least 2 mm greater than the inner diameter of the laminate stack (5) in order to enable axial yielding of the laminates of the laminate stack (5) which are located in the region of the plates (1) during manufacture.

2. Electric machine
- with at least one laminate stack (5), as part of a rotor, which is located on a shaft (4),
- wherein the laminate stack (5) has plates (1) on its end sides,
- wherein the laminate stack (5) and the plates (1) have cutouts (3), which are filled with electrically conductive material, such as copper or aluminium, which forms short-circuiting rings (6) at the end sides of the laminate stack (5) ,
- wherein the plates (1) have at least three webs (8), which point substantially radially inwards and thus serve to radially position the plates (1) on the shaft (4) and enable axial yielding of the laminates of the laminate stack (5) which are located in the region of the plates (1) during manufacture.

3. Electric machine
- with at least one laminate stack (5), as part of a rotor, which is located on a shaft (4),
- wherein the laminate stack (5) has plates (1) on its end sides,
- wherein the laminate stack (5) and the plates (1) have cutouts (3), which are filled with electrically conductive material, such as copper or aluminium, which forms short-circuiting rings at the end sides of the laminate stack (5) ,
- wherein the plates (1) each have a graduation produced by a turned recess in the side facing the laminate stack (5) such that the radially inner axial extent of the plates (1) is less than the radially outer axial extent of the plates (1) in order to enable axial yielding of the laminates of the laminate stack (5) which are located in the region of the plates (1) during manufacture.

4. Electric machine according to Claim 2, **characterized in that** at least one web (8) has means which increase the flexibility of said web in the radial direction.

5. Electric machine according to Claim 4, **characterized in that** at least one web (8) has a slot (9) running in the circumferential direction.

6. Electric machine according to Claim 4, **characterized in that** the thickness of the webs is reduced.

7. Electric machine according to Claim 4, **characterized in that** at least some webs are provided, in the region of the shaft (4), with a slot (9) provided in the circumferential direction or with a hole-like cutout (11).

8. Electric machine according to Claim 4, **characterized in that** the webs are deformed plastically in order to enlarge the inscribed inner diameter of the webs (5) to a minimum extent.

9. Electric machine according to one of the preceding claims, **characterized in that** the cutouts are closed or open radially, wherein, if the cutouts are open, said cutouts have a teardrop or rhomboidal shape.

10. Electric machine according to one of the preceding claims, **characterized in that** at least individual laminates have radially closed cutouts.

## Revendications

1. Machine électrique
- comprenant au moins en tant que partie d'un rotor un paquet ( 5 ) de tôles se trouvant sur un arbre ( 4 ),
- dans laquelle le paquet ( 5 ) de tôles a des plaques ( 1 ) sur ses côtés frontaux,
- dans laquelle le paquet ( 5 ) de tôles et la plaque ( 1 ) ont des évidements ( 3 ) dans lesquels est coulé du matériau conducteur de l'électricité, comme par exemple du cuivre ou de l'aluminium, qui forme des anneaux de court-circuit sur les côtés frontaux du paquet ( 5 ) de tôles,
- dans laquelle les plaques ( 1 ) sont réalisées planes et s'appliquent directement au paquet de tôles par l'une de leurs faces frontales,
- dans laquelle les plaques ( 1 ) ont un diamètre ( 2 ) intérieur qui est plus grand d'au moins 2 mm que le diamètre intérieur du paquet ( 5 ) de tôles, pour permettre pendant la fixation un déport axial des tôles du paquet ( 5 ) de tôles se trouvant dans la zone des plaques ( 1 ).

2. Machine électrique
- comprenant au moins, en tant que partie d'un rotor, un paquet ( 5 ) de tôles se trouvant sur un arbre ( 4 ),
- dans laquelle le paquet ( 5 ) de tôles a des plaques ( 1 ) sur ses côtés frontaux,
- dans laquelle le paquet ( 5 ) de tôles et les plaques ( 1 ) ont des évidements ( 3 ) dans lesquels est coulé du matériau conducteur de l'électricité, comme par exemple du cuivre ou de l'aluminium, qui forme des anneaux ( 6 ) de court-circuit sur les côtés frontaux du paquet ( 5 ) de tôles,
- dans laquelle les plaques ( 1 ) ont au moins trois nervures ( 8 ) qui vont vers l'intérieur sensiblement radialement et servent ainsi à la mise en position radiale des plaques ( 1 ) sur l'arbre ( 4 ) et permettent pendant la fabrication un déport axial des tôles du paquet ( 5 ) de tôles se trouvant dans la zone des plaques ( 1 ).

3. Machine électrique
- comprenant au moins, en tant que partie d'un rotor, un paquet ( 5 ) de tôles se trouvant sur un arbre ( 4 ),
- dans lequel un paquet ( 5 ) de tôles a des plaques ( 1 ) sur ses côtés frontaux,
- dans laquelle le paquet ( 5 ) et la plaque ( 1 ) ont des évidements ( 3 ) dans lesquels est coulé du matériau conducteur de l'électricité, comme par exemple du cuivre ou de l'aluminium, qui forme des anneaux de court-circuit sur les côtés frontaux du paquet ( 5 ) de tôles,
- dans laquelle les plaques ( 1 ) ont respectivement un gradin produit par un dégagement sur la face tournée vers le paquet ( 5 ) de tôles de manière à ce que l'étendue axiale intérieure radialement des plaques ( 1 ) soit plus petite que l'étendue axiale extérieure radialement des plaques ( 1 ), afin de permettre pendant la fabrication un déport axial des tôles du paquet ( 5 ) de tôles se trouvant dans la zone des plaques ( 1 ).

4. Machine électrique suivant la revendication 2, **caractérisée en ce qu'**au moins une nervure ( 8 ) a un moyen qui augmente son élasticité dans la direction radiale.

5. Machine électrique suivant la revendication 4, **caractérisée en ce qu'**au moins une nervure ( 8 ) a une fente ( 9 ) s'étendant dans la direction périphérique.

6. Machine électrique suivant la revendication 4, **caractérisée en ce que** l'épaisseur des nervures est réduite.

7. Machine électrique suivant la revendication 4, **caractérisée en ce qu'**au moins quelques nervures sont pourvues dans la zone de l'arbre ( 4 ) d'une fente ( 9 ) munie d' une direction périphérique ou d'un évidement ( 11 ) en forme de trou.

8. Machine électrique suivant la revendication 4, **caractérisée en ce que** les nervures sont déformées plastiquement pour augmenter au minimum un diamètre intérieur inscrit des nervures ( 8 ).

9. Machine électrique suivant l'une des revendications précédentes, **caractérisée en ce que** les évidements sont fermés radialement ou sont ouverts, dans laquelle, lorsque les évidements sont ouverts, il y a une forme en goutte ou en losange des évidements.

10. Machine électrique suivant l'une des revendications précédentes, **caractérisée en ce qu'**au moins certaines tôles ont des évidements fermés radialement.
